## Europäisches Patentamt

## European Patent Office

## Office européen des brevets

(11) Publication number: **0 073 549**
**B1**

(12) **EUROPEAN PATENT SPECIFICATION**

(45) Date of publication of patent specification: **24.06.87**

(51) Int. Cl.⁴: **B 60 T 17/08**

(21) Application number: **82201208.4**

(22) Date of filing: **03.03.80**

(80) Publication number of the earlier application in accordance with Art. 76 EPC: **0 016 566**

(54) Spring force applying actuators.

(30) Priority: **06.03.79 GB 7907826**

(43) Date of publication of application:
**09.03.83 Bulletin 83/10**

(45) Publication of the grant of the patent:
**24.06.87 Bulletin 87/26**

(84) Designated Contracting States:
**AT BE DE FR IT NL SE**

(56) References cited:
**DE-A-2 328 435**
**GB-A-1 280 275**
**GB-A-1 458 581**

(73) Proprietor: **BENDIX LIMITED**
**Douglas Road**
**Kingswood, Bristol BS15 2NL (GB)**

(72) Inventor: **Dagger, Norman Phillip**
**Bendix Limited Douglas Road**
**Kingswood Bristol BS15 2NL (GB)**
Inventor: **Durrant, Jeremy James**
**Bendix Limited Douglas Road**
**Kingswood Bristol BS15 2NL (GB)**

(74) Representative: **Turner, Alan Reginald**
**BENDIX LIMITED Douglas Road**
**Kingswood, Bristol BS15 2NL (GB)**

Courier Press, Leamington Spa, England.

EP 0 073 549 B1

## Description

This invention relates to spring force applying actuators and especially but not exclusively to brake actuators for applying a tensional output force.

Spring force applying actuators have been proposed especially for vehicle braking systems wherein the force of a spring is translated into a controllable output thrust of an output member, spring force being unloadable from the output member by an externally accessible release mechanism.

One such actuator has been described in Patent Specification GB—A—1,458,581. The spring force applying brake actuator as illustrated in that Specification comprises a generally cylindrical housing having two ends and a fluid pressure responsive piston therein between which and one end a heavy compression spring is retained. The piston and the other end form walls of a pressure chamber for application of control pressure for counteracting the force of the spring. The actuator has a force output rod extending through this end and which is coupled through a releasable clutch to the piston, this clutch being releaseable via means passing through a tubular portion of the other end of the housing.

From time to time there is a requirement for an alternative form of spring force applying actuator capable of producing tensional forces in the output member and the present invention seeks to provide an actuator which is readily modified to provide tensional forces or thrust forces.

According to the present invention there is provided a spring force applying actuator including a housing having two ends a fluid pressure responsive member moveable therein and between which and one said end a heavy compression spring is retained, the pressure responsive member and the other end forming walls of a fluid pressure chamber having a port for the application of control pressure for counteracting the force of the spring, the fluid pressure responsive member being engageable via externally accessible releaseable coupling means with a force output member extending through one end of the housing characterised by the force output member having a tubular portion and extending to be slideable through both said ends of the housing and by said releaseable coupling being accessible through said tubular portion.

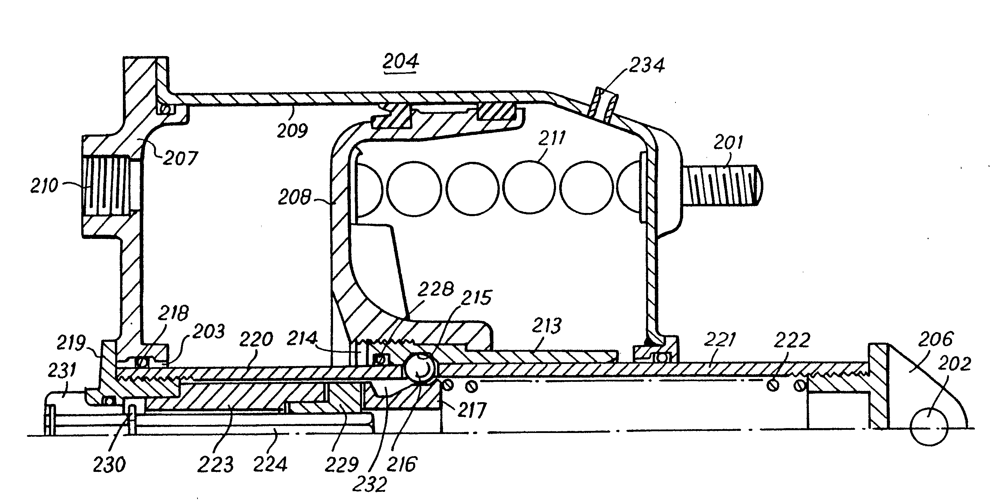

In order that the invention may be more clearly understood and readily carried into effect, the same will be further described by way of example with reference to the single figure of the accompanying drawing which illustrate a spring brake actuator.

Referring to the drawing this spring brake actuator is arranged to operate to exert a tension in a force output rod. The actuator has a cylindrical housing 204 with a cylindrical bore 209 with mounting studs such as 201 at one end, the housing being closed at the other end by a pressure plate 207 having an input port 210. A force output member 221 extends outwardly through the first end of the housing and has a tubular rearward extension 220 which extends sealingly through an aperture 203 in the other end via a seal 218. A pressure responsive member in the form of a piston 208 is carried on a tubular part 213 which can slide through a seal 228 on the tubular portion 220. The tubular part 213 is retained in the body of the piston 208 by a screw-plug 214 and has an annular recess 215 to receive a locking member in the form of a ball 216 in a corresponding aperture in the tubular piston rod 220. The ball 216 is one of three such balls in respective apertures equally spaced around the tubular member 221. Furthermore, the balls such as 216, are retained in the position shown by a guide member 217 which is urged leftwardly by a spring 222 retained in the tubular output member by an end plug 206 which is screwed into the tube 221 and is provided with an eye 202 for attachment to a clevis or other means for connection to a brake rigging. The guide member 217 is of such a shape that in the position shown, it retains the balls in engagement not only with the tube 220 but also with the tubular member 213. Rightward movement of the guide member however permits the balls to retract into an annular recess 232 such as to permit disengagement between members 213 and 220.

For the purposes of effecting such rightward movement of the guide member 217 when required to unload the force of the spring 211 from output member 221 the portion 220 which extends outwardly through the pressure plate 207, is provided with an annular retaining member 219, screwed into the outer end of 220, which retains a hexagonal key member 224 by means of a circlip 230 engageable in a groove of member 224. Member 224 has also an external hexagonal head 231. Bearing against an annular face of the guide member 217 which is remote from the spring 222, a member 229 is provided which has an hexagonal aperture which provides rotational keying but axial slideability thereof in relation to the member 224. The face of 229, which is remote from 217 is provided with cam faces which are complimentary to matching cam faces on a further annular member 223 which affords a rotational clearance for 224, but is axially and rotationally keyed by member 219. The end of 223 which engages with 219, is provided with an hexagonal section matching a corresponding internal hexagonal section on 219 to provide such keying.

Breathing of the spring chamber is provided via a port 234.

In operation of the brake actuator in the figure the region between the end 207 and the piston 208 is a control pressure chamber pressurisation of which by a control pressure applied via the control port 210 on attaining a predetermined fluid pressure on the left-hand side of the piston 208, overcomes the force of the spring 211 so that the output member 221 is held in the position shown in the drawing. This results in zero tension in the output member and is the release position for a brake operated by the actuator. In order to apply the brake, a reduction of control pressure at the port 210, sufficient to transfer at least a part of the force of the spring 211 via the piston 208 through tube portion 213, balls 216 and tube 220 to the member 206, creates a corresponding tension in the brake mechanism via the output member 221.

In the event of the brake being required to be released in conditions where no fluid pressure is available at the port 210, rotation of the hexagonal end 231 of the key member 224 causes corresponding rotation of the cam member 229 and, by virtue of the interacting cam faces between 223 and 229, the member 229 is deflected along the key member to produce corresponding axial movement of the guide member 217. The balls 216 are thereby permitted to descend into the annular recess in the guide member 217 and the tubular member 213 is thereby disengaged from the point of view of axial force transmission from the tubular piston rod 220. The brakes are thereby released. Upon subsequent repressurisation of the pressure chamber on the left of the piston 208, the piston 208 is deflected rightwardly against the force of the spring 211 and when the recess 215 falls into line with the balls 216 and their corresponding apertures in the rod 220, the thrust of the spring 222 being such as to tend to urge the guide member 217 in a left-ward direction causes the locking members to rise upwards out of the annular recess into re-engagement with the corresponding annular recess 215 in the tubular member 213. The locking mechanism is thereby reset. Only a further rotation of the hexagonal keying member 224 will result in release of the mechanism from the shown lock condition.

It will be readily apparent to persons having read the foregoing that by designing the part 206 on the one hand and on the other hand part 219 and the associated components, to be interchangeable a tensional spring force actuator such as described may be readily constructed alternatively as a thrust force actuator.

## Claims

1. A spring force applying actuator including a housing (204) having two ends a fluid pressure responsive member (208) moveable therein and between which and one said end a heavy compression spring (211) is retained, the pressure responsive member and the other end (207) forming walls of a fluid pressure chamber having a port (210) for the application of control pressure for counteracting the force of the spring, the fluid pressure responsive member being engageable via externally accessible releaseable coupling means (213, 216, 217) with a force output member (221) extending through one end of the housing, characterised by the force output member (221) having a tubular portion (220) and extending to be slideable through both said ends of the housing and by said releaseable coupling being accessible through said tubular portion.

2. A spring force applying actuator as claimed in claim 1, characterised in that the pressure responsive member (208) is slideable along the output member (221) and the coupling means comprise a locking member (216) located in an aperture in the output member and radially moveable by a guide member (217) into and out of engagement with a recess (215) of the pressure responsive member.

3. A spring force applying actuator as claimed in claim 2, characterised by the guide member (217) being displaceable axially within the output member by a face cam member (229) interacting with a face cam of an annular member (223) and being relatively engageable by a rotatable key member (224).

4. A spring force applying actuator as claimed in claim 3, characterised by the key member (224) being located to extend through the rearward extending tubular portion (220).

5. A spring force applying actuator as claimed in claim 3 characterised by the key member passing through the coupling means (229, 216).

6. A spring force applying actuator as claimed in any preceding claim characterised by said output member (220) having end fittings (206, 219) which are interchangeable.

## Patentansprüche

1. Federkraft anwendendes Betätigungsglied, umfassend ein Gehäuse (204), welches zwei Enden aufweist und in welchem ein auf Arbeitsmitteldruck ansprechender Teil (208) bewegbar ist, zwischen welchem und einem der genannten Enden eine starke Druckfeder (211) gehalten ist, wobei der auf Druck ansprechende Teil und das andere Ende (207) Wände einer Arbeitsmitteldruckkammer bilden, die eine Öffnung (210) für das Anlegen von Steuerdruck hat, um der Kraft der Feder entgegenzuwirken, und wobei der auf Arbeitsmitteldruck ansprechende Teil über von außen zugängliche freigebbare Kupplungsmittel (213, 216, 217) erfaßbar ist, wobei ein Kraftausgangsteil (221) sich durch ein Ende des Gehäuses erstreckt, dadurch gekennzeichnet, daß der Kraftausgangsteil (221) einen rohrförmigen Teil (220) aufweist und sich so erstreckt, daß er durch beide Enden des Gehäuses verschiebbar ist, und daß die freigebbare Kupplung durch den rohrförmigen Teil hindurch zugänglich ist.

2. Federkraft anwendendes Betätigungsglied nach Anspruch 1, dadurch gekennzeichnet, daß der auf Druck ansprechende Teil (208) entlang des Ausgangsteiles (221) verschiebbar ist und die Kupplungseinrichtung einen Sicherungsteil (216) aufweist, der in einer Öffnung in dem Ausgangsteil angeordnet und mittels eines Führungsteiles (217) radial in und außer Eingriff mit einer Ausnehmung (215) des auf Druck ansprechenden Teiles bewegbar ist.

3. Federkraft anwendendes Betätigungsglied nach Anspruch 2, dadurch gekennzeichnet, daß der Führungsteil (217) innerhalb des Ausgangsteiles durch einen Nockenflächenteil (229) axial verschiebbar ist, der mit einer Nockenfläche eines ringförmigen Teiles (223) zusammenwirkt und mittels eines drehbaren Keilteiles (224) relativ in Eingriff bringbar ist.

4. Federkraft anwendendes Betätigungsglied nach Anspruch 3, dadurch gekennzeichnet, daß der Keilteil (224) derart angeordnet ist, daß er sich durch den sich nach hinten erstreckenden rohrförmigen Teil (220) erstreckt.

5. Federkraft anwendendes Betätigungsglied nach Anspruch 3, dadurch gekennzeichnet, daß der Keilteil durch die Kupplungsmittel (229, 216) hindurchgeht.

6. Federkraft anwendendes Betätigungsglied nach einem der vorhergehenden Ansprüche, gekennzeichnet dadurch, daß der Ausgangsteil (220) Endverbindungsstücke (206, 219) aufweist, die austauschbar sind.

## Revendications

1. Dispositif de commande appliquant la force d'un ressort comprenant un boîtier (204) présentant deux extrémités, un organe (208) réagissant à la pression d'un fluide pouvant se déplacer à l'intérieur de ce boîtier et entre lequel et une desdites extrémités est disposé un fort ressort de compression (211), l'organe réagissant à la pression et l'autre extrémité (207) formant des parois d'une chambre à pression de fluide qui comporte un orifice (210) pour l'application d'une pression de commande s'opposant à la force du ressort, l'organe réagissant à la pression d'un fluide pouvant être attaqué, via des moyens de couplage (213, 216, 217) démontables, accessibles de l'extérieur, par un organe de transmission de force (221) s'étendant à travers une extrémité du boîtier, caractérisé en ce que l'organe (221) de transmission de force comporte une portion tubulaire (220) et se prolonge de façon à pouvoir coulisser à travers lesdites deux extrémités du boîtier et en ce que lesdits moyens de couplage sont accessibles à travers ladite portion tubulaire.

2. Dispositif de commande appliquant la force d'un ressort suivant la revendication 1, caractérisé en ce que l'organe (208) réagissant à la pression peut coulisser le long de l'organe de transmission (221) et en ce que les moyens de couplage comprennent un organe de blocage (216) logé dans une ouverture ménagée dans l'organe de transmission et déplaçable radialement par un organe de guidage (217) en position engagée ou dégagée dans un creux (215) prévu dans l'organe réagissant à la pression.

3. Dispositif de commande appliquant la force d'un ressort suivant la revendication 2, caractérisé en ce que l'organe de guidage (217) est déplaçable axialement à l'intérieur de l'organe de transmission au moyen d'un organe à came plane (229) coopérant avec une came plane formée sur une pièce annulaire (223) et pouvant être relativement attaqué par un organe-clé rotatif (224).

4. Dispositif de commande appliquant la force d'un ressort suivant la revendication 3, caractérisé en ce que l'organe-clé (224) est disposé de façon à s'étendre à travers la portion tubulaire (220) s'étendant vers l'arrière.

5. Dispositif de commande appliquant la force d'un ressort suivant la revendication 3, caractérisé en ce que l'organe-clé passe à travers les moyens de couplage (229, 216).

6. Dispositif de commande appliquant la force d'un ressort suivant l'une ou l'autre des revendications précédentes, caractérisé en ce que ledit organe de transmission (220) comporte des pièces d'extrémité (206, 219) qui sont interchangeables.